# EUROPEAN PATENT APPLICATION

(11) **EP 2 848 292 A1**
(43) Date of publication of application: **18.03.2015**
(21) Application number: 12844662.2
(22) Date of filing: 23.08.2012
(51) Int. Cl.: B01D 33/50, B01D 33/44, B01D 33/15, B01D 39/14

(54) **BACKWASH SUCTION APPARATUS OF FIBROUS FILTER, AND FIBROUS FILTER USING SAME**

(30) Priority: 26.04.2012 KR 20120043712
(71) Applicant: ANT Corporation, Jinan-gun, Jeollabuk-do 567-807 (KR)
(72) Inventor: KIM, Jaeku, Seoul 138-080 (KR); KUK, Younglong, Seoul 134-766 (KR)
(74) Representative: Raimondi, Adriana
(86) International application number: PCT/KR2012/006705
(87) International publication number: WO 2013/108975

(57) **Abstract**

Provided are a backwashing suction device and a fabric filtering apparatus using the same, in which, when a process of removing foreign materials attached to filter cloths of the disc-shaped filter pieces is not conducted, the backwashing suction device mounted in contact with disc-shaped filter pieces is separated from the disc-shaped filter pieces, thereby preventing the filter cloths of the disc-shaped filter pieces from being pressed down for a long time by the backwashing suction device so as to be able to improve filtering efficiency of the filter cloths and to prolong a service life of the filter cloths. Further, provided are a backwashing suction device which is configured to be separated from disc-shaped filter pieces using a buoyant force, thereby providing a simple structure and a smooth operation so as to enable close contact with or separation from the disc-shaped filter pieces, and a fabric filtering apparatus using the same.

## Description

### [Technical Field]

The present invention relates generally to a backwashing suction device and a fabric filtering apparatus using the same and, more particularly, to a backwashing suction device and a fabric filtering apparatus using the same, in which, when a process of removing foreign materials attached to surfaces of disc-shaped filter pieces is not conducted, the backwashing suction device is separated from the disc-shaped filter pieces, thereby preventing filter cloths from being pressed down by the backwashing suction device so as to be able to improve filtering performance of the disc-shaped filter pieces, to prolong a service life of the disc-shaped filter pieces, and to reduce energy consumption caused by the disc-shaped filter pieces.

### [Background Art]

In general, fabric filters are equipped with disc-shaped filter pieces whose surfaces having filter cloths (pile threads) and allow foreign materials to be filtered by the filter cloths while liquid passes through the disc-shaped filter pieces.

A disc-shaped fabric filtering apparatus is disclosed in Korean Patent No. 10-0424226. This fabric filtering apparatus is a liquid filtering apparatus that has: a filter cloth, which is located in a flow path of liquid to be filtered and has pile threads at a side exposed to a flow, and in which a length, strength, and density of the pile threads are set so that the pile threads are laid flat by a flow of the liquid to be filtered and form a depth filter with a plurality of angular and curved flow channels; and a suction bar 13 which is opposite to the pile-thread side of the filter cloth and which has a suction slit 17 for suctioning a backwashing flow through the filter cloth at such a rate of flow that the pile threads are straightened in a state in which the pile threads are erected from the filter cloth during backwashing; and means for creating relative movement between the suction bar and the filter cloth 6 in a movement direction parallel to the filter cloth,

The suction bar 13 has at least a surface 18 facing the filter cloth 6 at the side of the suction slit 17 situated in front in relation to relative movement. The surface is situated opposite the filter cloth 6 at such a small distance therefrom that it acts mechanically on the pile threads 21 and prevents the pile threads from being straightened.

Particularly, this fabric filtering apparatus conducts a backwashing function of causing foreign materials trapped in a filtering process by the pile threads 21 to be suctioned by the suction bar 13 in such a way that, as disc-shaped filter pieces 5 are rotated in a state in which the suction bar 13 is fixed, the pile threads 21 are slowly straightened by the surface 18 of the suction bar 13 until arrival at the suction slit 17 and are rapidly straightened when arriving at the suction slit 17.

However, this conventional fabric filtering apparatus has the following problems.
1) The suction bar is always kept in contact with the disc-shaped filter pieces to some extent. This leads to a problem in that, even when the filter cloths of the disc-shaped filter pieces that are in contact with the suction bar are not subjected to backwashing, the filter cloths are pressed down, and thus the pressed filter cloths cannot conduct the filtration, so that filtering efficiency is reduced.
2) Particularly, the pressing phenomenon of the filter cloths unnecessarily takes place even when the suction bar is not in use. In detail, the plurality of disc-shaped filter pieces are mounted so as to be able to be rotated by one rotary shaft regardless of the size of a filtration facility, and the rotary shaft is rotated to remove the foreign materials when it is determined that it is necessary to remove the foreign materials. In most cases, the foreign materials are removed from all of the disc-shaped filter pieces sequentially rather than being simultaneously removed. As such, even the disc-shaped filter pieces that are not required to remove the foreign materials are rotated together, and thus a phenomenon in which the filter cloths are unnecessarily pressed down by the suction bar occurs.
3) Due to the pressing phenomenon of the filter cloths caused by the suction bar, the foreign materials trapped by the filter cloths are finely fragmentized to be able to pass through the disc-shaped filter pieces, and thus there is a problem that the filtering performance of the filtering apparatus is reduced. This problem gets more serious when phosphorus (P) should be removed.
4) Further, since the suction bar is always kept in contact with all the disc-shaped filter pieces, friction between the suction bar and the disc-shaped filter pieces is unnecessarily increased. Thus, the wear of the disc-shaped filter pieces is accelerated, which reduces the service life of the disc-shaped filter pieces, and energy required to rotate the disc-shaped filter pieces is further added. As a result, there is a problem that a transmission of the filtering apparatus is increased in size.

### [Disclosure]

### [Technical Problem]

Accordingly, the present invention has been made keeping in mind the above problems occurring in the related art, and the present invention is directed to provide a backwashing suction device and a fabric filtering apparatus using the same, in which, when a process of removing foreign materials attached to filter cloths of the disc-shaped filter pieces is not conducted, the backwashing suction device mounted in contact with disc-shaped filter pieces is separated from the disc-shaped filter pieces, thereby preventing the filter cloths of the disc-shaped filter pieces from being pressed down for a long time by the backwashing suction device so as to be able to improve filtering efficiency of the filter cloths, to prolong a service life of the filter cloths, to reduce a size of a transmission of the backwashing suction device, and to reduce energy consumption caused by the disc-shaped filter pieces.

Further, the present invention is directed to provide a backwashing suction device which is configured to be separated from disc-shaped filter pieces using a buoyant force, thereby providing a simple structure and a smooth operation so as to enable close contact with or separation from the disc-shaped filter pieces, and a fabric filtering apparatus using the same.

### [Technical Solution]

According to an aspect of the present invention, there is provided a backwashing suction device for a fabric filtering apparatus, which is installed in a filter tank and removes foreign materials attached to a surface of at least one disc-shaped filter piece rotated along with a rotary shaft in a backwashing mode. The backwashing suction device includes a floating means that receives external air to generate a buoyant force therein when the foreign materials attached to the at least one disc-shaped filter piece are not removed, and separates the backwashing suction device from the at least one disc-shaped filter piece. The floating means includes a floating container in which a floating chamber, one wall of which is open, is formed and which is mounted on the backwashing suction device, and a feed pipe which is connected with the floating container and feeds/discharges the external air to/from the floating chamber.

Here, the backwashing suction device may be installed so as to be in close contact with the at least one disc-shaped filter piece while being elastically supported. The backwashing suction device may further include: a transverse bar that is mounted on a support bracket supporting the rotary shaft; at least one support bar that is hinged to the transverse bar and supports the backwashing suction device; and an elastic member that is installed between the transverse bar and the support bar and rotates the backwashing suction device toward the at least one disc-shaped filter piece. Further, the backwashing suction device may be installed on one or both surfaces of the at least one disc-shaped filter piece.

Further, the floating means may include a floating container in which a floating chamber, one wall of which is open, is formed and which is mounted on the backwashing suction device, and a feed pipe which is connected with the floating container and feeds/discharges the external air to/from the floating chamber.

Here, the open wall of the floating chamber may be a bottom wall.

According to another aspect of the present invention, there is provided a fabric filtering apparatus mounted in a filter tank so that at least one disc-shaped filter piece cooperating with the aforementioned backwashing suction device is rotated by a rotary shaft.

### [Advantageous Effects]

According to the backwashing suction device of the present invention and the fabric filtering apparatus using the same, the following effects are produced.
1) When filtration is not conducted, the backwashing suction device can be separated from the disc-shaped filter pieces. As such, the disc-shaped filter pieces can conduct the filtration, and thus filtering efficiency is increased.
2) The foreign materials trapped by the filter cloths are prevented from being finely fragmentized due to a pressed phenomenon of the filter cloths caused by the suction bar. As such, a problem that the filtering performance of the filtering apparatus is reduced due to the fragmentization of the foreign materials can be prevented.
3) Further, the backwashing suction device is separated from the disc-shaped filter pieces while not conducting the backwashing process. Thereby, the friction between the backwashing suction device and the disc-shaped filter pieces can be avoided. As such, the service life of the disc-shaped filter pieces can be increased, and the energy required to rotate the disc-shaped filter pieces can be reduced. Thus, the size of a transmission of the filtering apparatus can be reduced.
4) Since the backwashing suction device can be separated using a buoyant force of liquid to be filtered, the overall configuration of the filtering apparatus can be simplified.

### [Description of Drawings]

FIG. 1 is a schematic perspective view showing a configuration of a fabric filtering apparatus to which a backwashing suction device is applied in accordance with the present invention.
FIG. 2 is a schematic cross-sectional view showing a state in which the backwashing suction device is in close contact with disc-shaped filter pieces so as to enable filtration in accordance with the present invention.
FIG. 3 is a schematic cross-sectional view showing a state in which the backwashing suction device is separated from the disc-shaped filter pieces while filtration is not conducted in accordance with the present invention.

### [Mode for Invention]

Hereinafter, exemplary embodiments of the present invention will be described in detail with reference to the attached drawings. The terms and words used in the specification and claims should not be limited to typical or lexically identified meanings, but they should be interpreted as having meanings and concepts adapted to the technical spirit of the present invention based on the principle that an inventor is permitted to appropriately define the concepts of the terms to describe his/her own invention in the best way.

Therefore, it should be understood that, since exemplary embodiments described herein and the construction illustrated in the drawings are merely a most exemplary embodiment, but does not all cover the technical spirit of the present invention, various equivalents an modifications capable of replacing them can be present at the point of time of application of the present invention.

### (Configuration)

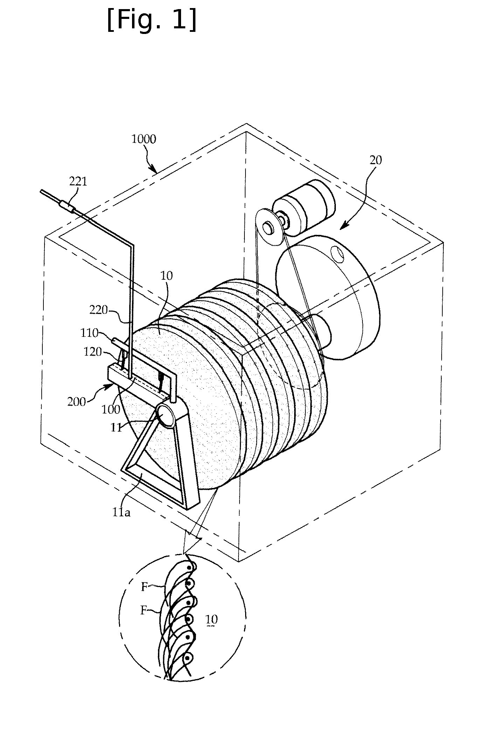

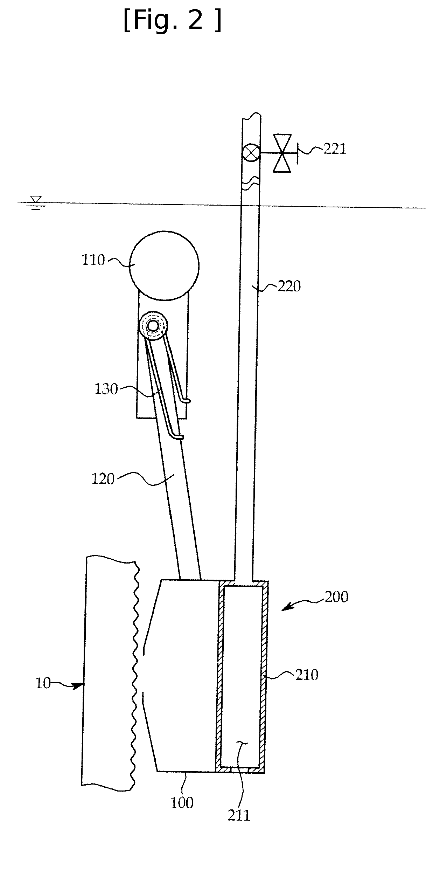

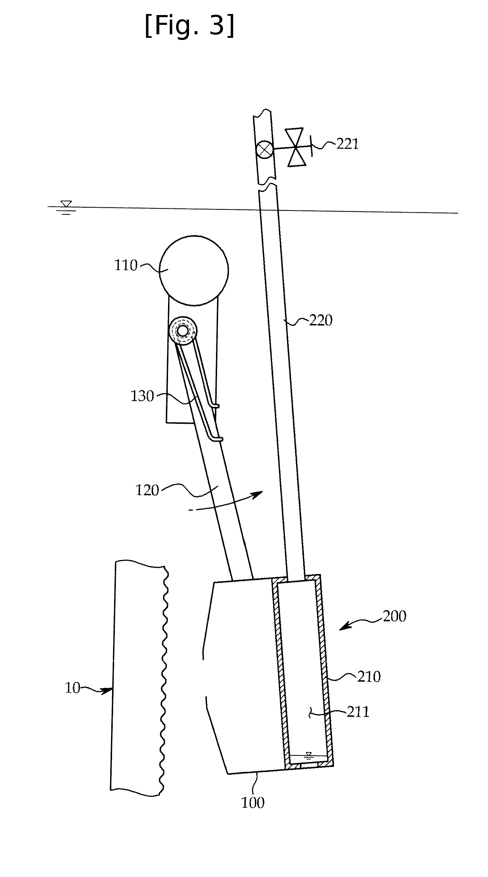

FIG. 1 is a schematic perspective view showing a configuration of a fabric filtering apparatus to which a backwashing suction device is applied in accordance with the present invention. FIG. 2 is a schematic cross-sectional view showing a state in which the backwashing suction device is in close contact with disc-shaped filter pieces so as to enable filtration in accordance with the present invention. FIG. 3 is a schematic cross-sectional view showing a state in which the backwashing suction device is separated from the disc-shaped filter pieces while filtration is not conducted in accordance with the present invention. Here, a reference number "10" indicates a disc-shaped filter piece whose filter cloths remove foreign materials from liquid to be filtered, and a reference number "1000" indicates a filter tank in which a fabric filtering apparatus is mounted.

A backwashing suction device of the fabric filtering apparatus according to the present invention includes a floating means 200 so as to be separated from the disc-shaped filter pieces 10 by a buoyant force of liquid to be filtered while filtration of the disc-shaped filter pieces 10 is not conducted.

Here, each disc-shaped tilter piece 10 is formed in a disc shape, and is provided with filter cloths F on a surface thereof. Each disc-shaped filter piece 10 refers to a filter manufactured by a typical technique so as to allow foreign materials to be removed by the filter cloths F while the liquid flows from the outside to the inside. The disc-shaped filter pieces 10 are mounted in the filter tank so as to be able to be selectively rotated by a rotary shaft 11.

Further, the backwashing suction device 100 refers to a device that is installed in a radial direction of the disc-shaped filter pieces so as to face the disc-shaped filter pieces 10 and removes foreign materials in a backwashing mode while the disc-shaped filter pieces 10 are rotated around the rotary shaft 11.

This configuration will be described in greater detail below.

The backwashing suction device 100 is always mounted at a position at which it faces the disc-shaped filter pieces 10. Particularly, the backwashing suction device 100 is installed so as to be able to be separated from the disc-shaped filter pieces 10. In detail, when the filter cloths F provided on the surfaces of the disc-shaped filter pieces 10 are covered with foreign materials, the backwashing suction device 100 removes the foreign material in the backwashing mode in which the foreign materials are suctioned in the opposite direction of an inflow direction of the liquid introduced into the disc-shaped filter pieces 10. The backwashing suction device 100 is installed on one surface of each disc-shaped filter piece 10 or on both surfaces of each disc-shaped filter piece 10.

The backwashing suction device 10 is configured to come into contact with the surface of each disc-shaped filter piece 10 while removing the foreign materials, and to be separated from each disc-shaped filter piece 10 while not removing the foreign materials.

As one method for providing this configuration, the backwashing suction device 100 is pivotably installed in the filter tank 1000 so as to face the disc-shaped filter pieces 10. To this end, a transverse bar 110 is mounted on a support bracket 11a supporting the rotary shaft 11, and at least one support bar 120 is pivotably installed on the transverse bar 110.

Further, the backwashing suction device 100 is pivotably mounted on an end of the support bar 120 so as to face the disc-shaped filter pieces 10. In this case, an elastic member 130 is provided between the transverse bar 110 and the support bar 120. The elastic member 130 causes the support bar 120 to pivot toward the discshaped filter pieces 10 by way of an elastic force. As a result, the backwashing suction device 100 mounted on the end of the support bar 120 comes into contact with the disc-shaped filter pieces 10 in a face-to-tace relation. The elastic member 130 may include a torsion bar spring, a coil spring, or a leaf spring.

In the exemplary embodiment of the present invention, the backwashing suction device 100 is preferably configured to be installed on the support bar 120 so as to be located in a radial direction based on the rotary shaft 11, thereby allowing the foreign materials to be removed from all the surfaces of the disc-shaped filter pieces 10 while the disc-shaped filter pieces 10 are rotated.

Further, in the exemplary embodiment of the present invention, the support bar 120 is described as being mounted on the support bracket 11a supporting the rotary shaft 11. However, the support bar 120 may be mounted on an inner wall of the filter tank 1000. However, the support bar 120 is mounted on the support bracket 11a. Thereby, the support bar 120 may be integrally configured with the fabric filtering apparatus.

Finally, in the exemplary embodiment of the present invention, it is preferable that the support bar 120 be configured so that the other end thereof moves farther away from the disc-shaped filter pieces 10 than the one end thereof hinged to the transverse bar 110, thereby allowing the backwashing suction device 100 to more easily rotate outward from the disc-shaped filter pieces 10 when a buoyant force is generated by the floating means 200 to be described below.

The floating means 200 includes a floating container 210 that is mounted on the backwashing suction device 100 so as to generate a buoyant force, and a feed pipe 220 that injects external air for generating the buoyant force into the floating container 210.

Here, the floating container 210 is provided with a hollow floating chamber 211 so as to receive the external air. Particularly preferably, a bottom wall of the floating container 210 is open. The floating container 210 configured in this way is always immersed in the liquid along with the backwashing suction device 100. Thus, the liquid also flow into the floating chamber 211.

Meanwhile, the feed pipe 220 is installed so that one end thereof can feed the external air into the floating chamber 211, and so that the other end thereof extends outside the filter tank 1000. Particularly, the feed pipe 220 is preferably provided with a coupling at an exposed end thereof so as to be able to be easily connected with an external air feeding means such as a compressor (not shown), and a discharge valve 221 so as to be able to generate the buoyant force by preventing the external air fed to the floating chamber 211 from being discharged to the outside.

The floating means 200 configured in this way separates the backwashing suction device 100 from the disc-shaped filter pieces 10 when it is unnecessary to remove the foreign materials from the filter cloths of the disc-shaped filter pieces 10, i.e., when the disc-shaped filter pieces 10 are operated normally.

To this end, the compressor is connected to the feed pipe 220 first, and then compressed air is fed to the floating chamber 211. Thus, as shown in FIG. 3, the liquid filled in the floating chamber 211 is pushed outside the floating chamber 211 by injection of the compressed air, and the buoyant force is generated inside the floating chamber 211.

The buoyant force generated in this way overcomes the elastic force of the elastic member 130 to cause the backwashing suction device 100 to be rotated to move away from the disc-shaped filter pieces 10.

As described above, the present invention can not only improve the filtering performance of the disc-shaped filter pieces but also prolong the service life of the disc-shaped filter pieces using the floating means capable of generating the buoyant force in a simple structure.

### (Configuration of fabric filtering apparatus)

The fabric filtering apparatus according to the present invention is installed in the filter tank 1000. This fabric filtering apparatus is equipped with at least one disc-shaped filter piece 10. The disc-shaped filter pieces 10 may be choked by foreign materials after filtering. To remove these foreign materials, the backwashing suction device 100 is provided.

Particularly, the backwashing suction device 100 is equipped with the floating means 200 as described above. According to circumstances, the floating means 200 selectively separates the backwashing suction device 100 from the disc-shaped filter pieces 10.

Further, the backwashing suction device 100 may be installed on one or both surfaces of each disc-shaped filter piece 10.

For the convenience of description, it is shown in FIG. 1 that the backwashing suction device 100 is provided only on the front surface of the foremost of the disc-shaped filter pieces 10.

In the drawings, an undescribed reference number "20" indicates a rotating device for rotating the rotary shaft.

## Claims

1. A backwashing suction device for a fabric filtering apparatus, which is installed in a filter tank 1000 and removes foreign materials attached to a surface of at least one disc-shaped filter piece 10 rotated along with a rotary shaft 11 in a backwashing mode, the backwashing suction device 100 comprising
a floating means 200 that receives external air to generate a buoyant force therein when the foreign materials attached to the at least one disc-shaped filter piece 10 are not removed, and separates the backwashing suction device from the at least one disc-shaped filter piece 10.
wherein the floating means 200 includes a floating container 210 in which a floating chamber 211, one wall of which is open, is formed and which is mounted on the backwashing suction device 100, and a feed pipe 220 which is connected with the floating container 210 and feeds/discharges the external air to/from the floating chamber 211.

2. The backwashing suction device according to claim 1, wherein the backwashing suction device 100 is installed so as to be in close contact with the at least one disc-shaped filter piece 10 while being elastically supported.

3. The backwashing suction device according to claim 2, further comprising:
a transverse bar 110 that is mounted on a support bracket 11a supporting the rotary shaft 11;
at least one support bar 120 that is hinged to the transverse bar 110 and supports the backwashing suction device 100; and
an elastic member 130 that is installed between the transverse bar 110 and the support bar 120 and rotates the backwashing suction device 10 toward the at least one disc-shaped filter piece 10.

4. The backwashing suction device according to claim 1, wherein the backwashing suction device 100 is installed on one or both surfaces of the at least one disc-shaped filter piece 10.

5. The backwashing suction device according to claim 1, wherein the open wall of the floating chamber 211 is a bottom wall.

6. A fabric filtering apparatus mounted in a filter tank 1000 so that at least one disc-shaped filter piece 10 cooperating with the backwashing suction device according to any one of claims 1 to 5 is rotated by a rotary shaft 11.
